# EUROPEAN PATENT APPLICATION

(11) **EP 4 778 807 A1**
(43) Date of publication of application: **22.07.2026**
(21) Application number: 23951686.7
(22) Date of filing: 12.09.2023
(51) Int. Cl.: B62D 6/00, B62D 5/04

(54) **TURNING CONTROL DEVICE AND TURNING CONTROL METHOD**

(71) Applicant: JTEKT CORPORATION, Kariya-shi, Aichi 448-8652 (JP)
(72) Inventor: OKADA Toshihiko, Kariya-shi, Aichi 448-8652 (JP)
(74) Representative: Winter, Brandl - Partnerschaft mbB
(86) International application number: PCT/JP2023/033150
(87) International publication number: WO 2025/057287

(57) **Abstract**

A turning control device (70) is configured to execute a turning process, a detection process, and a storage process. The turning process is a process of turning a steered wheel in at least one direction out of two directions to a right-turning side and to a left-turning side by operating a motor. The detection process is a process in which a detection value of an absolute angle sensor and a detection value of a rotation angle sensor when the turning process is being executed are input, and a degree of mismatch between an axial displacement amount of a steered shaft and a rotation angle on an input side of a conversion device is detected. The storage process is a process of storing, in a storage device, a correction amount for suppression of the mismatch between the axial displacement amount of the steered shaft and the rotation angle on the input side of the conversion device.

## Description

### TECHNICAL FIELD

The present disclosure relates to a turning control device and a turning control method.

### BACKGROUND ART

Patent Document 1 below describes a turning system that turns steered wheels by displacing a steered shaft in an axial direction. This system includes a transmission device that converts rotation of a motor into axial displacement of the steered shaft. This system detects an abnormality in the transmission device from the rotation angle of the motor and the amount of movement of the steered shaft.

### Related Art Documents

### Patent Documents

Patent Document 1: Japanese Unexamined Patent Application Publication No. 2019-104488 (JP 2019-104488 A)

### SUMMARY OF THE INVENTION

### Problem to be Solved by the Invention

In the case of the turning system described above, when an assembling deviation is compounded with a detection deviation of a sensor, an abnormality may be erroneously detected in the transmission device even though no abnormality has occurred.

### Means for Solving the Problem

In one aspect of the present disclosure, a turning control device is provided. In the turning control device, a turning actuator including a conversion device that converts rotation of a motor into axial displacement of a steered shaft is an operational object. The steered shaft is configured to turn a steered wheel by the axial displacement. The turning control device includes an execution device and a storage device. The execution device is configured to execute a turning process, a detection process, and a storage process. The turning process is a process of turning the steered wheel in at least one direction out of two directions to a right-turning side and to a left-turning side by operating the motor. The detection process is a process in which a detection value of an absolute angle sensor and a detection value of a rotation angle sensor when the turning process is being executed are input, and a degree of mismatch between an axial displacement amount of the steered shaft and a rotation angle on an input side of the conversion device is detected. The storage process is a process of storing, in the storage device, a correction amount for suppression of the mismatch between the axial displacement amount of the steered shaft and the rotation angle on the input side of the conversion device. The absolute angle sensor is a sensor that detects an amount having a one-to-one correspondence with a steered angle of the steered wheel. The rotation angle sensor is a sensor that detects the rotation angle on the input side of the conversion device.

In another aspect of the present disclosure, a turning control method is provided. In the turning control method, a turning actuator including a conversion device that converts rotation of a motor into axial displacement of a steered shaft is an operational object. The steered shaft is configured to turn a steered wheel by the axial displacement. The turning control method includes a step of executing a turning process, a detection process, and a storage process. The turning process is a process of turning the steered wheel in at least one direction out of two directions to a right-turning side and to a left-turning side by operating the motor. The detection process is a process in which a detection value of an absolute angle sensor and a detection value of a rotation angle sensor when the turning process is being executed are input, and a degree of mismatch between an axial displacement amount of the steered shaft and a rotation angle on an input side of the conversion device is detected. The storage process is a process of storing, in a storage device, a correction amount for suppression of the mismatch between the axial displacement amount of the steered shaft and the rotation angle on the input side of the conversion device. The absolute angle sensor is a sensor that detects an amount having a one-to-one correspondence with a steered angle of the steered wheel. The rotation angle sensor is a sensor that detects the rotation angle on the input side of the conversion device.

### BRIEF DESCRIPTION OF THE DRAWINGS

[FIG. 1] FIG. 1 is a block diagram showing a steering system according to an embodiment.
[FIG. 2] FIG. 2 is a flowchart showing procedures of a process that is executed by a turning control device shown in FIG. 1.
[FIG. 3] FIG. 3 is a flowchart showing procedures of a process that is executed by the turning control device shown in FIG. 1.
[FIG. 4] FIG. 4 is a block diagram showing a manufacturing process for the steering system in FIG. 1.
[FIG. 5] FIG. 5 is a flowchart showing procedures of a process that is executed by the turning control device shown in FIG. 4.
[FIG. 6] FIG. 6 is a flowchart showing procedures of a process that is executed by the turning control device shown in FIG. 4.
[FIG. 7] FIG. 7 is a flowchart showing procedures of a process that is executed by the turning control device shown in FIG. 4.
[FIG. 8] FIG. 8 is a diagram showing an example of control in the manufacturing process shown in FIG. 4.
[FIG. 9] FIG. 9 is a diagram showing an example of control in the manufacturing process shown in FIG. 4.

### MODES FOR CARRYING OUT THE INVENTION

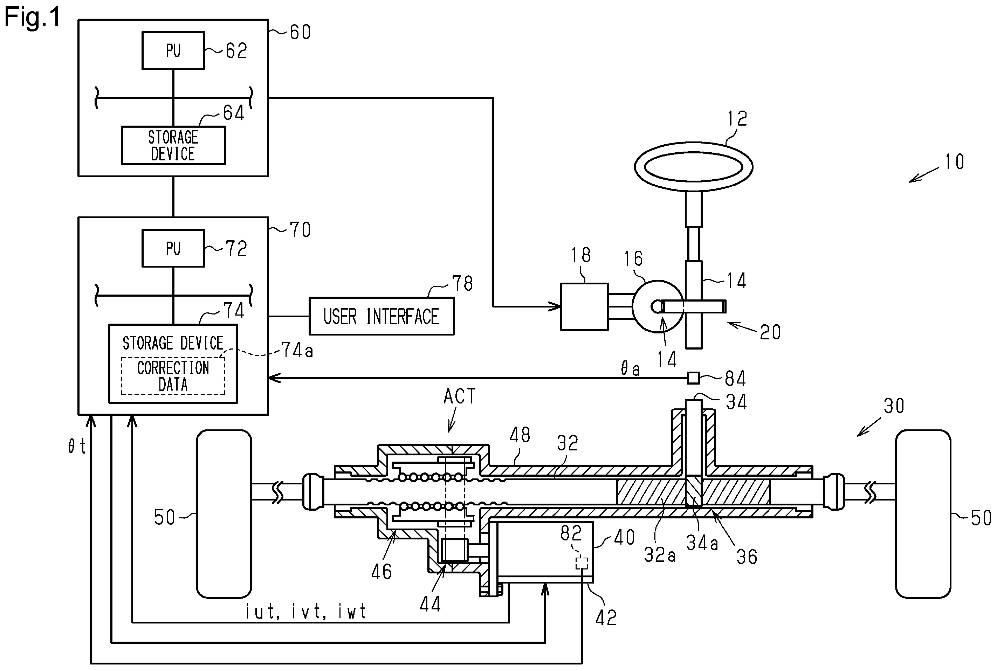

An embodiment will be described below with reference to the drawings. "Configuration of Steering System"
FIG. 1 shows the configuration of a steering system 10 of a vehicle. The steering system 10 includes a steering device 20, a turning device 30, a reaction force control device 60, and a turning control device 70.

The steering device 20 includes a steering wheel 12 and a steering shaft 14 mechanically connected to the steering wheel 12. A reaction motor 16 is mechanically connected to the steering shaft 14. The reaction motor 16 is used to apply a reaction force that counters the operation on the steering wheel 12 by a driver. An output voltage of an inverter 18 is applied to terminals of the reaction motor 16.

The turning device 30 includes a steered shaft 32 and a pinion shaft 34. The steered shaft 32 has rack teeth 32a. The pinion shaft 34 has pinion teeth 34a. The rack teeth 32a and the pinion teeth 34a are engaged with each other to form a rack and pinion mechanism 36.

The turning device 30 includes a turning actuator ACT. The turning actuator ACT includes a turning motor 40, an inverter 42, a transmission mechanism 44, and a conversion mechanism 46. The transmission mechanism 44 transmits rotation of the turning motor 40 to the conversion mechanism 46, for example, via a belt. The conversion mechanism 46 includes, for example, a ball screw mechanism. The conversion mechanism 46 converts rotational displacement from the transmission mechanism 44 into axial displacement of the steered shaft 32. The transmission mechanism 44 and the conversion mechanism 46 are conversion devices that convert rotational power of the turning motor 40 into axial displacement power of the steered shaft 32.

Steered wheels 50 are turned by the axial displacement of the steered shaft 32. The range of the axial displacement of the steered shaft 32 is determined by a rack housing 48. In other words, the maximum value of the steered angle of the steered wheels 50 on the right-turning side and the maximum value of the steered angle on the left-turning side are determined by the positions at which the displacement of the steered shaft 32 is prevented by the rack housing 48.

The reaction force control device 60 includes a PU 62 and a storage device 64. The controlled object for the reaction force control device 60 is the steering device 20 and the operational object is the reaction motor 16. The reaction force control device 60 controls the controlled variable of the controlled object by the PU 62 executing a program stored in the storage device 64.

The turning control device 70 includes a PU 72 and a storage device 74. The controlled object for the turning control device 70 is the steered wheels 50 and the operational object is the turning actuator ACT. The turning control device 70 controls the controlled variable of the controlled object by the PU 72 executing a program stored in the storage device 74. The turning control device 70 refers to a rotation angle of the turning motor 40 detected by a rotation angle sensor 82 to control the controlled variable. The turning control device 70 refers to an absolute angle θa detected by an absolute angle sensor 84 to control the controlled variable. The absolute angle θa is a rotation angle of the pinion shaft 34. The absolute angle θa is a variable having a one-to-one correspondence with the steered angle. For example, the absolute angle θa has a positive value in the case of the right-turning side, and a negative value in the case of the left-turning side. For example, when the maximum value of the steered angle on the right-turning side is larger than one rotation of the pinion shaft 34, the absolute angle θa may be an angle exceeding 360°. The turning control device 70 refers to currents iut, ivt, iwt flowing through the turning motor 40. The currents iut, ivt, iwt may be detected as voltage drops across shunt resistors provided in the legs of the inverter 42.

The reaction force control device 60 and the turning control device 70 can communicate with each other.

### "Processes of Turning Control Device"

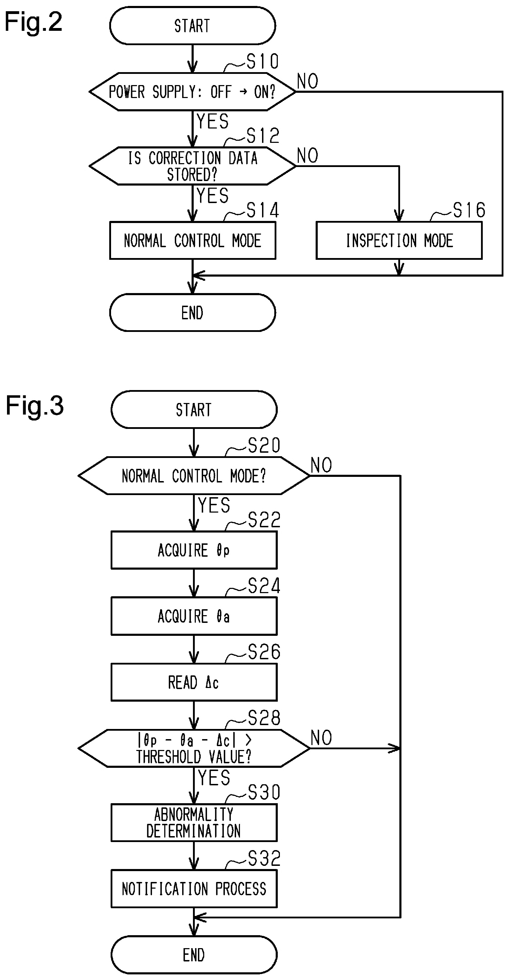

FIG. 2 shows procedures of a process that is executed when the turning control device 70 is activated. The process shown in FIG. 2 is implemented by the PU 72 repeatedly executing, for example, at predetermined intervals, a program stored in the storage device 74. In the following, step numbers for each process are represented by numbers preceded by "S."

In the series of processes shown in FIG. 2, the PU 72 first determines whether the power supply to the turning control device 70 has been switched from OFF to ON (S10). When the PU 72 determines that the power supply has been switched (S10: YES), the PU 72 determines whether correction data 74a is stored in the storage device 74 (S12). When the PU 72 determines that the correction data 74a is stored (S12: YES), the PU 72 sets the operation mode to a normal control mode (S14). The normal control mode is a mode for executing normal control in which the steered angle is the controlled variable. When the PU 72 determines that the correction data 74a is not stored (S12: NO), the PU 72 sets the operation mode to an inspection mode (S16). The inspection mode is a mode for executing a process of acquiring the correction data 74a.

The PU 72 temporarily terminates the series of processes shown in FIG. 2 when the process of S14 or S16 is completed or when negative determination is made in the process of S10. FIG. 3 shows procedures of a process that is executed by the turning control device 70. The process shown in FIG. 3 is implemented by the PU 72 repeatedly executing, for example, at predetermined intervals, a program stored in the storage device 74 in the normal control mode.

In the series of processes shown in FIG. 3, the PU 72 first determines whether the operation mode is the normal control mode (S20). When the PU 72 determines that the operation mode is the normal control mode (S20: YES), the PU 72 acquires an equivalent steered angle θp (S22). The equivalent steered angle θp is a variable having a one-to-one correspondence with the steered angle of the steered wheels 50. The equivalent steered angle θp is, for example, the rotation angle of the pinion shaft 34. The equivalent steered angle θp is calculated by the PU 72 based on a process of integrating a rotation angle θt. For example, the equivalent steered angle θp has a positive value in the case of the right-turning side, and a negative value in the case of the left-turning side. In the present embodiment, the resolution of the equivalent steered angle θp is higher than the resolution of the absolute angle θa. That is, the equivalent steered angle θp can express a steered angle that is smaller than the absolute angle θa. The PU 72 acquires the latest absolute angle θa detected by the absolute angle sensor 84 (S24). The PU 72 reads a correction amount Δc from the correction data 74a stored in the storage device 74 (S26).

The PU 72 determines whether the absolute value of a value obtained by subtracting the absolute angle θa and the correction amount Δc from the equivalent steered angle θp is larger than a threshold value (S28). When the PU 72 determines that the absolute value is larger than the threshold value (S28: YES), the PU 72 determines that an abnormality has occurred (S30). That is, when the absolute value of the difference between the equivalent steered angle θp and the absolute angle θa is large, there is a possibility that the rotation of the turning motor 40 is not converted accurately into the axial displacement of the steered shaft 32. The PU 72 notifies a user about the abnormality by operating a user interface 78 shown in FIG. 1 (S32).

The PU 72 temporarily terminates the series of processes shown in FIG. 3 when the process of S32 is completed or when negative determination is made in the process of S20 or S28.

### "Acquisition of Correction Data 74a"

The correction data 74a is stored in the storage device 74 before the turning device 30 is mounted on the vehicle.

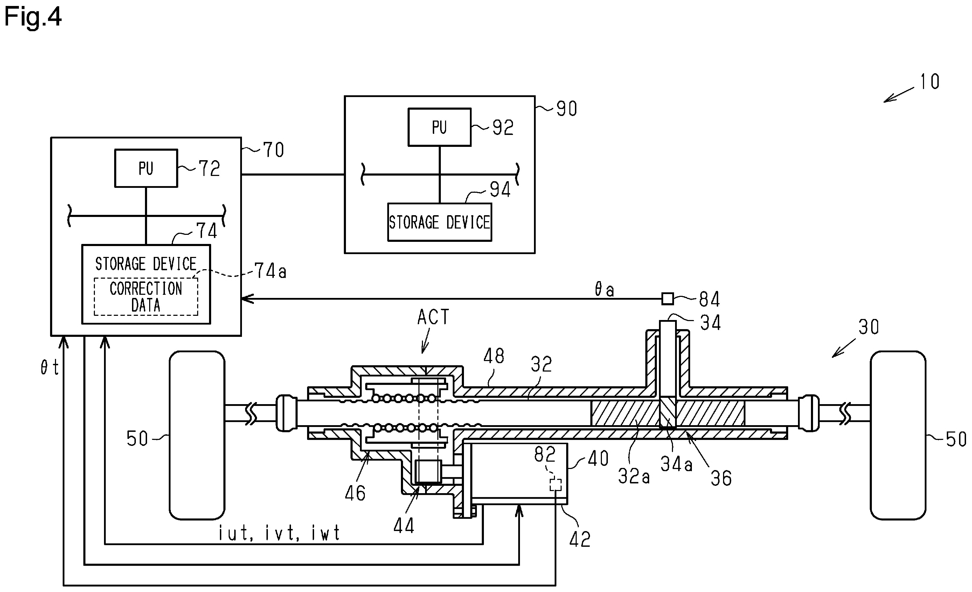

FIG. 4 shows a hardware configuration when the correction data 74a is acquired. As shown in FIG. 4, the turning control device 70 is connected to a facility-side terminal 90. The facility-side terminal 90 includes a PU 92 and a storage device 94. The facility-side terminal 90 causes the turning control device 70 to execute the process of acquiring the correction data 74a by the PU 92 executing a program stored in the storage device 94.

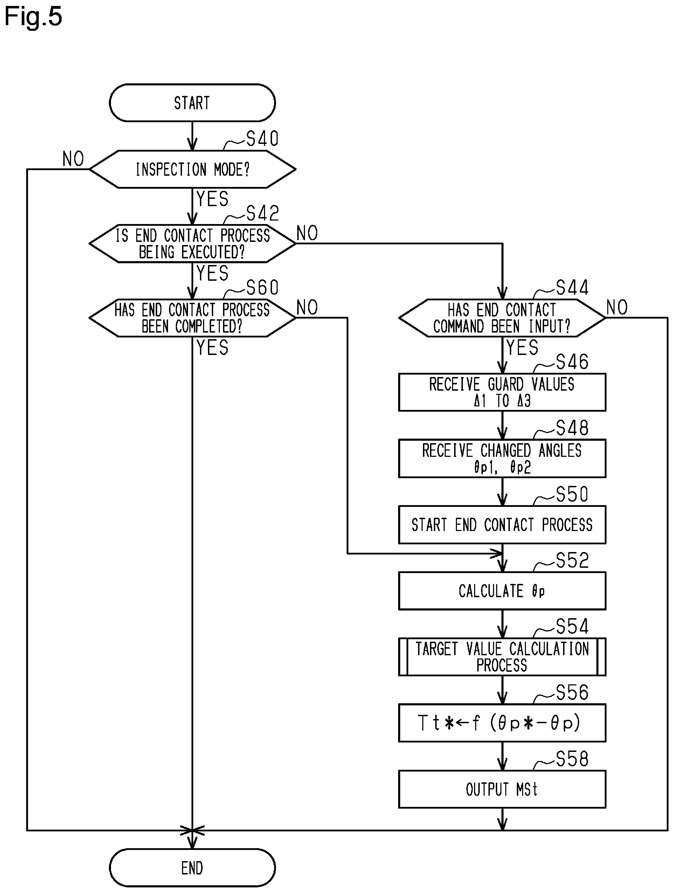

FIG. 5 shows procedures of a process for acquiring the correction data 74a. The process shown in FIG. 5 is implemented by the PU 72 repeatedly executing, for example, at predetermined intervals, a program stored in the storage device 74.

In the series of processes shown in FIG. 5, the PU 72 first determines whether the operation mode is the inspection mode (S40). When the PU 72 determines that the operation mode is the inspection mode (S40: YES), the PU 72 determines whether an end contact process is being executed (S42). When the PU 72 determines that the end contact process is not being executed (S42: NO), the PU 72 determines whether an end contact command has been input from the facility-side terminal 90 to the turning control device 70 (S44). When the PU 72 determines that the command has been input (S44: YES), the PU 72 receives data indicating guard values Δ1 to Δ3 output by the facility-side terminal 90 (S46). The PU 72 also receives changed angles θp1, θp2 output by the facility-side terminal 90 (S48). Then, the PU 72 starts the end contact process (S50).

Next, the PU 72 acquires the equivalent steered angle θp (S52). Then, the PU 72 calculates a target equivalent steered angle θp* that is a target value of the equivalent steered angle θp (S54). Next, the PU 72 calculates target torque Tt* according to an operation amount by feedback control in which the equivalent steered angle θp is the controlled variable and the target equivalent steered angle θp* is the target value of the controlled variable (S56). The target torque Tt* is torque of the turning motor 40.

Then, the PU 72 outputs, to the inverter 42, an operation signal MSt for the inverter 42 to bring the torque of the turning motor 40 closer to the target torque Tt* (S58). When the PU 72 determines that the end contact process is being executed (S42: YES), the PU 72 determines whether the end contact process has been completed (S60). When the PU 72 determines that the end contact process has not been completed (S60: NO), the PU 72 proceeds to the process of S52.

The PU 72 temporarily terminates the series of processes shown in FIG. 5 when the PU 72 determines that the end contact process has been completed (S60: YES), when negative determination is made in the process of S40 or S44, or when the process of S58 is completed.

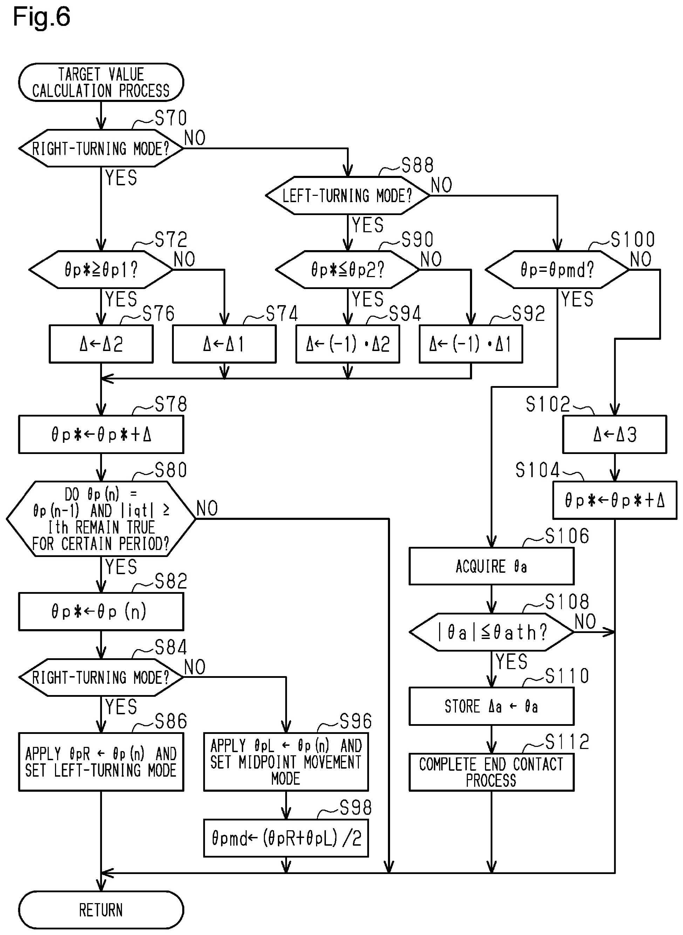

FIG. 6 shows details of the process of S54. In the series of processes shown in FIG. 6, the PU 72 determines whether the control mode for the steered wheels 50 in the end contact process is a right-turning mode (S70). The right-turning mode is a mode for executing a process of turning the steered wheels 50 to the right-turning side. For example, the PU 72 sets the right-turning mode at the start of the process of S70.

When the PU 72 determines that the mode is the right-turning mode (S70: YES), the PU 72 determines whether the target equivalent steered angle θp* is equal to or larger than the changed angle θp1 (S72). When the PU 72 determines that the target equivalent steered angle θp* is smaller than the changed angle θp1 (S72: NO), the PU 72 substitutes the guard value Δ1 for a change amount Δ (S74). The change amount Δ determines the amount of change in the target equivalent steered angle θp* per predetermined time. In other words, the change amount Δ determines the rate of change in the target equivalent steered angle θp*. When the PU 72 determines that the target equivalent steered angle θp* is equal to or larger than the changed angle θp1 (S72: YES), the PU 72 substitutes the guard value Δ2 for the change amount Δ (S76). The guard values Δ1, Δ2 are positive values, and the guard value Δ1 is set to a value larger than the guard value Δ2.

When the process of S74 or S76 is completed, the PU 72 substitutes, for the target equivalent steered angle θp*, a value obtained by adding the change amount Δ to the target equivalent steered angle θp* (S78). Then, the PU 72 determines whether the logical product of the following conditions (A) and (B) remains true for a certain period (S80).

The condition (A) is a condition that a previous value "θp(n-1)" and a current value "θp(n)" of the equivalent steered angle θp are equal to each other. The condition (B) is a condition that the absolute value of a q-axis current iqt flowing through the turning motor 40 is equal to or larger than a threshold value Ith. The threshold value Ith is set to a value larger than a value expected as the absolute value of the q-axis current iqt when the steered wheels 50 are turned in a case where the steered angle is in an intermediate region between an upper limit value on the right-turning side and an upper limit value on the left-turning side.

The above conditions (A) and (B) are conditions for determining whether the steered angle has reached the upper limit value on the right-turning side. When the PU 72 determines that the logical product of the conditions (A) and (B) remains true for the certain period (S80: YES), the PU 72 substitutes the current value "θp(n)" of the equivalent steered angle θp for the target equivalent steered angle θp* (S82). Then, the PU 72 determines whether the control mode is the right-turning mode (S84). When the PU 72 determines that the control mode is the right-turning mode (S84: YES), the PU 72 substitutes the current value "θp(n)" for a right-side upper limit value θpR, and sets the control mode to a left-turning mode (S86).

When the PU 72 determines that the control mode is not the right-turning mode (S70: NO), the PU 72 determines whether the control mode is the left-turning mode (S88). When the PU 72 determines that the control mode is the left-turning mode (S88: YES), the PU 72 determines whether the target equivalent steered angle θp* is equal to or smaller than the changed angle θp2 (S90). When the PU 72 determines that the target equivalent steered angle θp* is larger than the changed angle θp2 (S90: NO), the PU 72 substitutes "(-1)·Δ1" for the change amount Δ (S92). When the PU 72 determines that the target equivalent steered angle θp* is equal to or smaller than the changed angle θp2 (S90: YES), the PU 72 substitutes "(-1)·Δ2" for the change amount Δ (S94).

The PU 72 proceeds to the process of S78 also when the process of S92 or S94 is completed. The process of S80 that is executed in response to completion of the process of S92 or S94 is a process of determining whether the steered angle has reached the upper limit value on the left-turning side.

When negative determination is made in the process of S84, the PU 72 substitutes the current value "θp(n)" for a left-side upper limit value θpL, and sets the control mode to a midpoint movement mode (S96). Then, the PU 72 substitutes "1/2" of the sum of the right-side upper limit value θpR and the left-side upper limit value θpL for a midpoint θpmd (S98).

When negative determination is then made in the process of S88, the PU 72 determines whether the equivalent steered angle θp agrees with the midpoint θpmd (S100). When the PU 72 determines that the equivalent steered angle θp does not agree with the midpoint θpmd (S100: NO), the PU 72 substitutes the guard value Δ3 for the change amount Δ (S102). The guard value Δ3 is a positive value, and is set to a value larger than the guard value Δ2. The guard value Δ3 may be equal to the guard value Δ1. Then, the PU 72 substitutes, for the target equivalent steered angle θp*, a value obtained by adding the change amount Δ to the target equivalent steered angle θp* (S104).

When the PU 72 determines that the equivalent steered angle θp agrees with the midpoint θpmd (S100: YES), the PU 72 acquires the latest absolute angle θa detected by the absolute angle sensor 84 (S106). Then, the PU 72 determines whether the absolute value of the absolute angle θa is equal to or smaller than a threshold value θath (S108). The process of S108 is a process of determining whether the absolute angle θa has been acquired normally. That is, when affirmative determination is made in the process of S100, the absolute angle θa is considered to be close to zero. Therefore, when the absolute angle θa deviates significantly from zero, it is considered that some abnormality is present.

When the PU 72 determines that the absolute value is equal to or smaller than the threshold value θath (S108: YES), the PU 72 substitutes the absolute angle θa for a correction amount Δa, and then stores the correction amount Δa in the storage device 74 (S110). Thus, the storage device 74 makes transition from a state in which the correction data 74a that is data indicating the correction amount Δa is not stored to a state in which the correction data 74a is stored.

Then, the PU 72 completes the end contact process (S112). The PU 72 temporarily terminates the series of processes shown in FIG. 6 when the process of S86, S98, S104, or S112 is completed or when negative determination is made in the process of S80 or S108.

The PU 72 may refer to the correction amount Δa to evaluate the reliability of the equivalent steered angle θp before executing the control in which the equivalent steered angle θp is the controlled variable. Specifically, the PU 72 may evaluate, for example, the reliability of the equivalent steered angle θp to be high when the absolute value of the difference between the absolute angle θa corrected by the correction amount Δa and the equivalent steered angle θp is equal to or smaller than a threshold value. The PU 72 may execute a process of substituting the absolute angle θa corrected by the correction amount Δa for the initial value of the equivalent steered angle θp when the turning control device 70 is activated. In this way, reference is made to the correction amount Δa such that the PU 72 can execute the control in which the equivalent steered angle θp is the controlled variable.

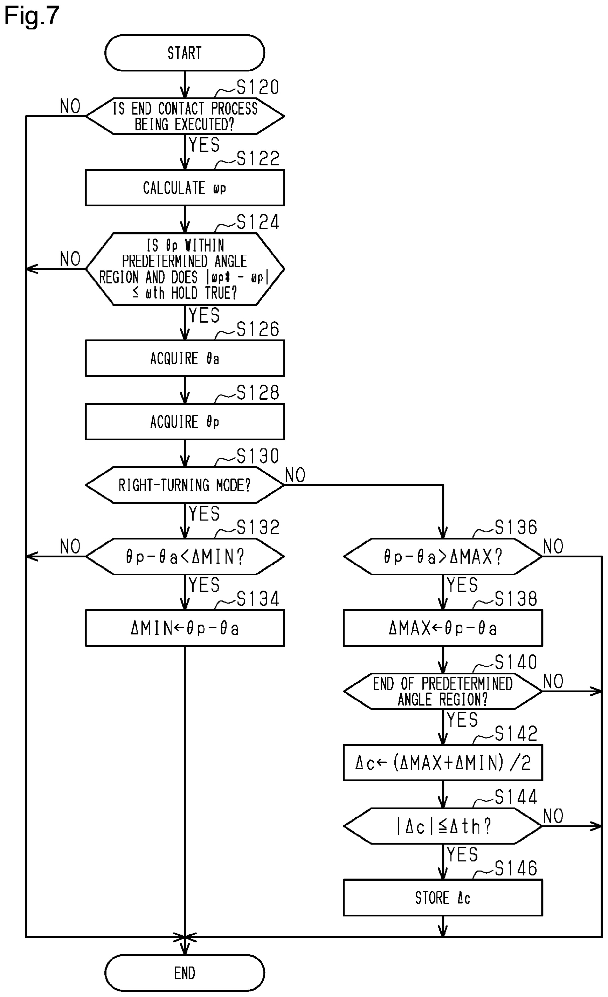

FIG. 7 shows procedures of a process that is related to acquisition of the correction amount Δc and is executed during the end contact process. The process shown in FIG. 7 is implemented by the PU 72 repeatedly executing, for example, at predetermined intervals, a program stored in the storage device 74.

In the series of processes shown in FIG. 7, the PU 72 first determines whether the end contact process is being executed (S120). When the PU 72 determines that the end contact process is being executed (S120: YES), the PU 72 calculates an equivalent steered angle velocity ωp (S122). The equivalent steered angle velocity ωp is the rate of change in the equivalent steered angle θp. Next, the PU 72 determines whether the logical product of the following conditions (C) and (D) is true (S124).

The condition (C) is a condition that the equivalent steered angle θp is within a predetermined angle region. The predetermined angle region is included in a region in which the rate of change in the target equivalent steered angle θp* is defined by the guard value Δ1.

The condition (D) is a condition that the absolute value of a difference between a target steered angle velocity ωp* and the equivalent steered angle velocity ωp is equal to or smaller than a threshold value ωth. The target steered angle velocity ωp* is the rate of change in the target equivalent steered angle θp*. The target steered angle velocity ωp* is determined by the guard value Δ1. The condition (D) is a process of determining whether the rate of change in the equivalent steered angle θp has stabilized.

When the PU 72 determines that the logical product is true (S124: YES), the PU 72 acquires the absolute angle θa (S126). The PU 72 acquires the equivalent steered angle θp (S128). Then, the PU 72 determines whether the control mode is the right-turning mode (S130). When the PU 72 determines that the control mode is the right-turning mode (S130: YES), the PU 72 determines whether a value obtained by subtracting the absolute angle θa from the equivalent steered angle θp is smaller than a minimum value ΔMIN (S132). The initial value of the minimum value ΔMIN is set to a value equal to or larger than the maximum value expected for the value obtained by subtracting the absolute angle θa from the equivalent steered angle θp.

When the PU 72 determines that the value obtained by subtraction is smaller than the minimum value ΔMIN (S132: YES), the PU 72 substitutes the value obtained by subtraction for the minimum value ΔMIN (S134). When the PU 72 determines that the control mode is the left-turning mode (S130: NO), the PU 72 determines whether the value obtained by subtraction is larger than a maximum value ΔMAX (S136). The initial value of the maximum value ΔMAX is set to a value equal to or smaller than the minimum value expected for the value obtained by subtraction.

When the PU 72 determines that the value obtained by subtraction is larger than the maximum value ΔMAX (S136: YES), the PU 72 substitutes the value obtained by subtraction for the maximum value ΔMAX (S138). The PU 72 determines whether the equivalent steered angle θp has reached the end of the predetermined angle region on the left-turning side (S140). When the PU 72 determines that the equivalent steered angle θp has reached the end (S140: YES), the PU 72 substitutes "1/2" of the sum of the maximum value ΔMAX and the minimum value ΔMIN for the correction amount Δc (S142). Then, the PU 72 determines whether the absolute value of the correction amount Δc is equal to or smaller than a threshold value Δth (S144). When the PU 72 determines that the correction amount Δc is equal to or smaller than the threshold value Δth (S144: YES), the PU 72 stores the correction amount Δc in the storage device 74 (S146). The data indicating the correction amount Δc is part of the correction data 74a.

The PU 72 temporarily terminates the series of processes shown in FIG. 7 when the process of S134 or S146 is completed or when negative determination is made in the process of S120, S124, S132, S136, S140, or S144.

### <Functions of Embodiment>

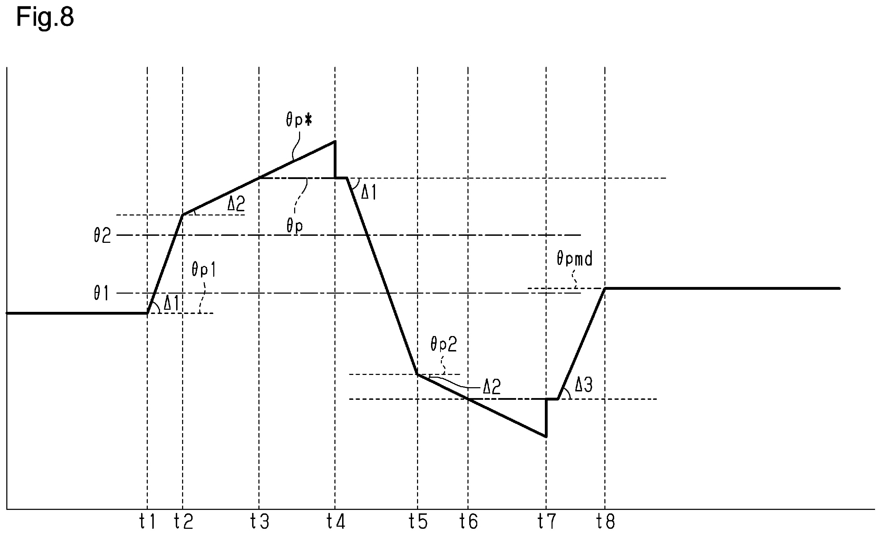

FIG. 8 illustrates the end contact process. As shown in FIG. 8, when the end contact command is input from the facility-side terminal 90, the PU 72 increases the target equivalent steered angle θp* at a rate defined by the guard value Δ1 from time t1 onwards. Thus, the equivalent steered angle θp indicating the steered angle of the steered wheels 50 is controlled to follow the target equivalent steered angle θp*. At time t2 at which the target equivalent steered angle θp* reaches the changed angle θp1, the PU 72 changes the rate of change in the target equivalent steered angle θp* to a rate defined by the guard value Δ2. When the target equivalent steered angle θp* reaches the right-side upper limit value θpR at time t3, the equivalent steered angle θp does not increase any further. Therefore, at time t4, the PU 72 reduces the target equivalent steered angle θp* to the equivalent steered angle θp.

Then, the PU 72 reduces the target equivalent steered angle θp* at the rate defined by the guard value Δ1. When the target equivalent steered angle θp* reaches the changed angle θp2 at time t5, the PU 72 changes the rate of decrease in the target equivalent steered angle θp* to the rate defined by the guard value Δ2. When the equivalent steered angle θp reaches the left-side upper limit value θpL at time t6, the equivalent steered angle θp stops changing. Therefore, at time t7, the PU 72 increases the target equivalent steered angle θp* to the equivalent steered angle θp. Then, the PU 72 increases the target equivalent steered angle θp* at a rate defined by the guard value Δ3. When the equivalent steered angle θp reaches the midpoint θpmd, the PU 72 acquires the absolute angle θa. When the absolute value of the absolute angle θa is equal to or smaller than the threshold value θath, the PU 72 stores the absolute angle θa in the storage device 74 as the correction amount Δa.

The PU 72 monitors a deviation between the equivalent steered angle θp and the absolute angle θa during the end contact process. The PU 72 updates the minimum value ΔMIN when the control mode is the right-turning mode and the equivalent steered angle θp is within a predetermined angle region defined by a rotation angle θ1 and a rotation angle θ2 in FIG. 8. Thus, the minimum value ΔMIN becomes the minimum value of the value obtained by subtracting the absolute angle θa from the equivalent steered angle θp when the control mode is the right-turning mode and the equivalent steered angle θp is within the predetermined angle region. The PU 72 updates the maximum value ΔMAX when the control mode is the left-turning mode and the equivalent steered angle θp is within the predetermined angle region. Thus, the maximum value ΔMAX becomes the maximum value of the value obtained by subtracting the absolute angle θa from the equivalent steered angle θp when the control mode is the left-turning mode and the equivalent steered angle θp is within the predetermined angle region.

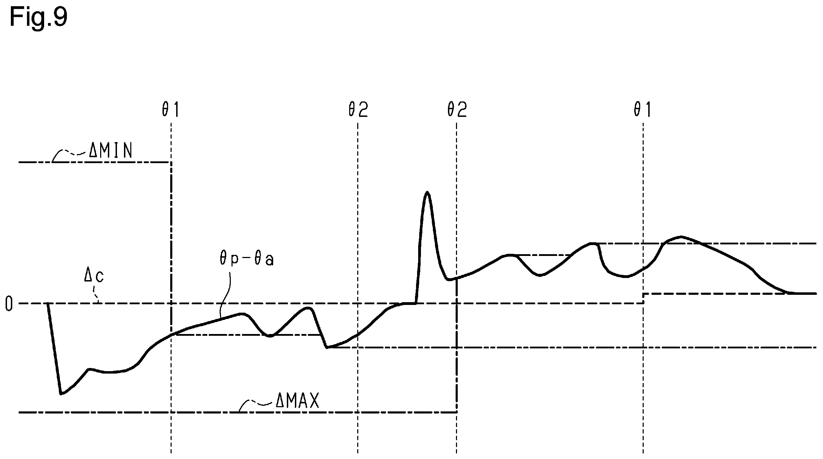

FIG. 9 shows the transition of the value obtained by subtraction, the maximum value ΔMAX, and the minimum value ΔMIN. As shown in FIG. 9, the minimum value ΔMIN and the maximum value ΔMAX represent the magnitude of the difference between the equivalent steered angle θp and the absolute angle θa during the right turning and the left turning, respectively. By determining the correction amount Δc based on the minimum value ΔMIN and the maximum value ΔMAX, it is possible to suppress erroneous determination that an abnormality has occurred in the process of FIG. 3.

The above embodiment further has the following functions and effects.
(1) The PU 72 calculates the correction amount Δc using both the difference between the equivalent steered angle θp and the absolute angle θa in the right-turning mode in which the steered wheels 50 are turned in a first direction, and the difference between the equivalent steered angle θp and the absolute angle θa in the left-turning mode in which the steered wheels 50 are turned in a second direction. A deviation may occur in the axial displacement amount of the steered shaft 32 relative to the rotation amount of the turning motor 40 between the right-turning mode and the left-turning mode. In this case, it is desirable to reflect, in the correction amount Δc, the difference between the equivalent steered angle θp and the absolute angle θa in the mode in which the deviation is larger. By reflecting, in the correction amount Δc, the differences between the equivalent steered angle θp and the absolute angle θa in both the right-turning mode and the left-turning mode, the difference between the equivalent steered angle θp and the absolute angle θa in the mode in which the deviation is larger can be reflected in the correction amount Δc.
(2) A first region that is an angle region for determination of the difference between the equivalent steered angle θp and the absolute angle θa in the right-turning mode is the same as a second region that is an angle region for determination of the difference between the equivalent steered angle θp and the absolute angle θa in the left-turning mode. When the angle region for determination of the difference between the equivalent steered angle θp and the absolute angle θa is the same for both the right-turning mode and the left-turning mode, the variation in the differences in the right-turning mode and the left-turning mode can be grasped.
(3) The PU 72 calculates the correction amount Δc by averaging the maximum value ΔMAX and the minimum value ΔMIN. Thus, both the degree to which the absolute angle θa deviates to the right-turning side relative to the equivalent steered angle θp and the degree to which the absolute angle θa deviates to the left-turning side relative to the equivalent steered angle θp can be reflected in the correction amount Δc.
(4) The PU 72 detects the difference between the equivalent steered angle θp and the absolute angle θa when the equivalent steered angle velocity ωp is stable. Thus, it is possible to detect the difference between the equivalent steered angle θp and the absolute angle θa with higher accuracy than in the case where the difference is detected when the equivalent steered angle velocity ωp is unstable.
(5) The PU 72 stores the correction amount Δc in the storage device 74 when the PU 72 determines that the absolute value of the correction amount Δc is equal to or smaller than the threshold value Δth. Thus, it is possible to suppress storage of an inappropriate value in the storage device 74 as the correction amount Δc due to some abnormality.
(6) The PU 72 sets the operation mode to the inspection mode when the correction amount Δc is not stored in the storage device 74. Thus, it is possible to suppress execution of the normal control on the steered wheels 50 in a state in which the correction amount Δc is not stored in the storage device 74.
(7) The PU 72 executes, during the end contact process, the process of determining the difference between the equivalent steered angle θp and the absolute angle θa to calculate the correction amount Δc. Thus, the process of determining the midpoint and the process of calculating the correction amount Δc can be executed simultaneously.
(8) The guard value Δ3 is set to a value larger than the guard value Δ2. Thus, it is possible to reduce the period required to reach the midpoint θpmd compared to a case where the guard value Δ2 is used in the midpoint movement mode.
(9) The present embodiment employs the system in which the guard values Δ1 to Δ3 are input from the facility-side terminal 90 to the turning control device 70. Thus, the right-turning speed etc. can be flexibly set to appropriate values in response to requirements such as the schedule of the manufacturing process for the turning device 30.
(10) The present embodiment employs the system in which the changed angles θp1, θp2 are input from the facility-side terminal 90 to the turning control device 70. Thus, the period required for the right-turning mode etc. can be flexibly set to appropriate values in response to requirements such as the schedule of the manufacturing process for the turning device 30.
(11) In the present embodiment, the equivalent steered angle θp according to the integration process for the rotation angle θt of the turning motor 40 is employed as the controlled variable of the feedback control in the midpoint movement mode. The equivalent steered angle θp has a higher resolution than the absolute angle θa. Therefore, the steered angle of the steered wheels 50 can be controlled to the midpoint with high accuracy.
(12) The PU 72 stores the absolute angle θa in the storage device 74 as the correction data 74a under the condition that the absolute value of the absolute angle θa when the equivalent steered angle θp reaches the midpoint θpmd is equal to or smaller than the threshold value θath. This suppresses storage of the absolute angle θa when the steered angle of the steered wheels 50 is not at the midpoint due to some abnormality.

### <Other Embodiments>

The present embodiment can be modified as follows. The present embodiment and the following modifications can be combined with each other as long as no technical contradictions arise.

### "Regarding Detection Process"

- The first region that is the angle region for determination of the difference between the equivalent steered angle θp and the absolute angle θa in the right-turning mode need not be the same as the second region that is the angle region for determination of the difference between the equivalent steered angle θp and the absolute angle θa in the left-turning mode. For example, the first region may encompass the second region. For example, the first region and the second region may be a region on the right-turning side and a region on the left-turning side relative to the neutral position, respectively.
- The angle region for detection of the degree of mismatch between the axial displacement amount of the steered shaft 32 and the rotation angle on the input side of the conversion device need not be the angle region in which the target steered angle velocity ωp* is defined by the guard value Δ1.
- The averaging process for the degree of mismatch between the axial displacement amount of the steered shaft 32 and the rotation angle on the input side of the conversion device in the right-turning mode and the degree of the mismatch in the left-turning mode is not limited to the process exemplified in the above embodiment. For example, the PU 72 may determine the maximum values ΔMAX and the minimum values ΔMIN in both the first region and the second region, and calculate the average value of the maximum values ΔMAX and the minimum values ΔMIN. For example, the PU 72 may sample three or more degrees of the mismatch in a combined region of the first region and the second region, and calculate the average value of them. It is desirable that the sampling points of the degree of the mismatch be defined by the rotation angles. It is also desirable that the number of times the sampling is executed in the first region be the same as the number of times the sampling is executed in the second region.
- The detection process need not be the process of detecting the degree of mismatch in the right-turning mode and the degree of mismatch in the left-turning mode. The detection process may be a process of detecting only one of the two degrees of mismatch in the right-turning mode and in the left-turning mode.

### "Regarding Rotation Speed on Input Side"

- The rotation angle on the input side of the conversion device that converts the rotation of the turning motor 40 into the change in the steered angle of the steered wheels 50 is not limited to the rotation angle θt. For example, in a case where a transmission is provided between the turning motor 40 and the belt of the transmission mechanism 44, the rotation angle may be the rotation angle of an output shaft of the transmission.

### "Regarding Right-turning Operation Process"

- The number of times the right-turning speed is changed in the right-turning operation process need not be one, but may be two or more.
- The condition for the PU 72 to determine that the right-side upper limit value θpR has been reached is not limited to the condition that the logical product of the above conditions (A) and (B) remains true for the certain period. The condition for the PU 72 to determine that the right-side upper limit value θpR has been reached may be, for example, a condition that the above condition (A) is satisfied for a certain period. The condition for the PU 72 to determine that the right-side upper limit value θpR has been reached may be, for example, a condition that the above condition (B) is satisfied for a certain period.
- When the PU 72 determines that the right-side upper limit value θpR has been reached, the PU 72 need not execute the process of substituting the equivalent steered angle θp for the target equivalent steered angle θp*. For example, when the PU 72 determines that the right-side upper limit value θpR has been reached, the PU 72 may gradually reduce the target equivalent steered angle θp* according to the guard value Δ1.
- The controlled variable of the feedback control in the right-turning operation process need not be the equivalent steered angle θp. For example, the controlled variable of the feedback control in the right-turning operation process may be the rate of change in the equivalent steered angle θp. For example, the controlled variable of the feedback control in the right-turning operation process may be the absolute angle θa.

### "Regarding Left-turning Operation Process"

- The number of times the left-turning speed is changed in the left-turning operation process need not be one, but may be two or more.
- The condition for the PU 72 to determine that the left-side upper limit value θpL has been reached is not limited to the condition that the logical product of the above conditions (A) and (B) remains true for the certain period. The condition for the PU 72 to determine that the left-side upper limit value θpL has been reached may be, for example, a condition that the above condition (A) is satisfied for a certain period. The condition for the PU 72 to determine that the left-side upper limit value θpL has been reached may be, for example, a condition that the above condition (B) is satisfied for a certain period.
- When the PU 72 determines that the left-side upper limit value θpL has been reached, the PU 72 need not execute the process of substituting the equivalent steered angle θp for the target equivalent steered angle θp*. For example, when the PU 72 determines that the left-side upper limit value θpL has been reached, the PU 72 may gradually reduce the target equivalent steered angle θp* according to the guard value Δ1.
- The controlled variable of the feedback control in the left-turning operation process need not be the equivalent steered angle θp. For example, the controlled variable of the feedback control in the left-turning operation process may be the rate of change in the equivalent steered angle θp. For example, the controlled variable of the feedback control in the left-turning operation process may be the absolute angle θa.

### "Regarding Turning Process"

- The turning process to be used to detect the degree of mismatch through the detection process is not limited to the end contact process. The turning process may be a process dedicated to detecting the degree of mismatch.

### "Regarding Midpoint Calculation Process"

- In the midpoint calculation process, the process of S108 is not essential.
- For example, when the controlled variable of the feedback control in each of the right-turning operation process and the left-turning operation process is the absolute angle θa, the PU 72 may determine each of the right-side upper limit value θpR and the left-side upper limit value θpL as the value of the absolute angle θa. In this case, the PU 72 may store the midpoint θpmd that is "1/2" of the sum of the right-side upper limit value θpR and the left-side upper limit value θpL in the storage device 74 as the correction data 74a.

### "Regarding End Contact Process"

- The end contact process need not be executed before the turning device 30 is mounted on the vehicle. For example, the end contact process may be executed immediately after the turning device 30 is mounted on the vehicle. In this case, the end contact process can be executed in the same manner as in the above embodiment, for example, when the turning control device 70 is mounted on the vehicle and the turning control device 70 can communicate with the facility-side terminal 90.

### "Regarding Absolute Angle Sensor"

- The absolute angle sensor that detects an amount having a one-to-one correspondence with the steered angle of the steered wheels 50 is not limited to the sensor illustrated in the above embodiment. For example, a linear stroke sensor that directly detects the axial displacement amount of the steered shaft 32 may be used.
- The resolution of the absolute angle θa need not be lower than the resolution of the equivalent steered angle θp.

### "Regarding Turning Control Device"

- The guard values Δ1, Δ2, Δ3 need not be input to the turning control device 70 from the facility-side terminal 90. For example, the guard values Δ1, Δ2, Δ3 may be stored in advance in the storage device 74 of the turning control device 70.
- The changed angles θp1, θp2 need not be input to the turning control device 70 from the facility-side terminal 90. For example, the changed angles θp1, θp2 may be stored in advance in the storage device 74 of the turning control device 70.
- The turning control device is not limited to one that executes software processing. For example, the turning control device may include a dedicated hardware circuit, such as an ASIC, that executes at least part of the processes executed in the above embodiment by hardware processing. That is, the turning control device may include a processing circuit including any of the following configurations (a) to (c): (a) a processing circuit including a processing device that executes all of the above processes according to a program, and a program storage device such as a storage device that stores the program, (b) a processing circuit including a processing device that executes part of the above processes according to a program, a program storage device, and a dedicated hardware circuit that executes the remainder of the above processes, and (c) a processing circuit including a dedicated hardware circuit that executes all of the above processes. The number of software execution devices including a processing device and a program storage device may be two or more. The number of dedicated hardware circuits may be two or more.

### "Regarding Turning Control System"

- In a case where the facility-side terminal 90 does not input the guard values Δ1, Δ2, Δ3 and the changed angles θp1, θp2 to the turning control device 70, the facility-side terminal 90 may have only the function of outputting a command to execute the end contact process to the turning control device 70.

### "Regarding Turning Control Method"

- The computer mounted on the turning control device 70 need not execute all of the processes illustrated in FIGS. 2 to 7. For example, part of the processes may be executed by the computer of the facility-side terminal 90.

## Claims

1. A turning control device in which a turning actuator including a conversion device that converts rotation of a motor into axial displacement of a steered shaft is an operational object, the steered shaft being configured to turn a steered wheel by the axial displacement, the turning control device comprising an execution device and a storage device, wherein:
the execution device is configured to execute a turning process, a detection process, and a storage process;
the turning process is a process of turning the steered wheel in at least one direction out of two directions to a right-turning side and to a left-turning side by operating the motor;
the detection process is a process in which a detection value of an absolute angle sensor and a detection value of a rotation angle sensor when the turning process is being executed are input, and a degree of mismatch between an axial displacement amount of the steered shaft and a rotation angle on an input side of the conversion device is detected;
the storage process is a process of storing, in the storage device, a correction amount for suppression of the mismatch between the axial displacement amount of the steered shaft and the rotation angle on the input side of the conversion device;
the absolute angle sensor is a sensor that detects an amount having a one-to-one correspondence with a steered angle of the steered wheel; and
the rotation angle sensor is a sensor that detects the rotation angle on the input side of the conversion device.

2. The turning control device according to claim 1, wherein the turning process is a process of turning the steered wheel in each of the two directions.

3. The turning control device according to claim 2, wherein the detection process is a process of quantifying the degree of the mismatch by averaging a degree of the mismatch when the steered wheel is turned in a first direction out of the two directions and a degree of the mismatch when the steered wheel is turned in a second direction out of the two directions.

4. The turning control device according to claim 3, wherein:
the detection process is a process of detecting the degree of the mismatch in each of a case where the steered wheel is turned in the first direction out of the two directions in a first region and a case where the steered wheel is turned in the second direction out of the two directions in a second region;
the first region and the second region are rotation angle regions of the steered wheel; and
a size of the first region and a size of the second region are equal to each other.

5. The turning control device according to claim 4, wherein the first region and the second region are the same region.

6. The turning control device according to claim 3, wherein:
the axial displacement amount of the steered shaft and the rotation angle on the input side of the conversion device are quantified by the same rotation angle; and
the detection process is a process of quantifying the degree of the mismatch by averaging a minimum value of a difference of the rotation angle on the input side of the conversion device from the displacement amount when the steered wheel is turned in the first direction and a maximum value of the difference when the steered wheel is turned in the second direction.

7. The turning control device according to claim 1, wherein:
the turning process includes a process of bringing a turning speed of the steered wheel closer to a target speed; and
the detection process is a process of detecting the degree of the mismatch under a condition that the turning speed of the steered wheel is controlled to a constant speed.

8. The turning control device according to claim 1, wherein:
the execution device is configured to execute a determination process;
the determination process is a process of determining whether the degree of the mismatch detected by the detection process is within a predetermined range; and
the execution device is configured to execute the storage process when determination is made, by the determination process, that the degree of the mismatch is within the predetermined range.

9. The turning control device according to claim 1, wherein:
the execution device is configured to execute a mode setting process;
the mode setting process includes a process of setting an operation mode of the execution device to an inspection mode when the correction amount is not stored in the storage device; and
the execution device is configured to execute the turning process, the detection process, and the storage process in the inspection mode.

10. The turning control device according to claim 9, wherein:
the mode setting process includes a process of setting the operation mode to a normal control mode when the correction amount is stored in the storage device;
the execution device is configured to execute an abnormality detection process in the normal control mode;
the abnormality detection process is a process of determining that an abnormality has occurred when the detection value of the absolute angle sensor and the detection value of the rotation angle sensor are input and the degree of the mismatch between the axial displacement amount of the steered shaft and the rotation angle on the input side of the conversion device is outside an allowable range; and
the degree of the mismatch that is a target of determination as to whether the degree is outside the allowable range is a value corrected by the correction amount.

11. The turning control device according to claim 1, wherein:
the turning process includes a right-turning operation process and a left-turning operation process;
the right-turning operation process is a process of maximally displacing the steered wheel to the right-turning side at a right-turning speed by operating the motor;
the left-turning operation process is a process of maximally displacing the steered wheel to the left-turning side at a left-turning speed by operating the motor;
the execution device is configured to execute a midpoint calculation process; and
the midpoint calculation process is a process of calculating a midpoint between a maximum value of the steered angle of the steered wheel on the right-turning side in the right-turning operation process and a maximum value of the steered angle on the left-turning side in the left-turning operation process.

12. A turning control method in which a turning actuator including a conversion device that converts rotation of a motor into axial displacement of a steered shaft is an operational object, the steered shaft being configured to turn a steered wheel by the axial displacement, the turning control method comprising a step of executing a turning process, a detection process, and a storage process, wherein:
the turning process is a process of turning the steered wheel in at least one direction out of two directions to a right-turning side and to a left-turning side by operating the motor;
the detection process is a process in which a detection value of an absolute angle sensor and a detection value of a rotation angle sensor when the turning process is being executed are input, and a degree of mismatch between an axial displacement amount of the steered shaft and a rotation angle on an input side of the conversion device is detected;
the storage process is a process of storing, in a storage device, a correction amount for suppression of the mismatch between the axial displacement amount of the steered shaft and the rotation angle on the input side of the conversion device;
the absolute angle sensor is a sensor that detects an amount having a one-to-one correspondence with a steered angle of the steered wheel; and
the rotation angle sensor is a sensor that detects the rotation angle on the input side of the conversion device.
